# EUROPEAN PATENT SPECIFICATION

(11) **EP 1 986 368 B1**
(45) Date of publication and mention of the grant of the patent: **16.12.2009**
(21) Application number: 08154920.6
(22) Date of filing: 22.04.2008
(51) Int. Cl.: H04L 12/18

(54) **Method and apparatus for conferencing**
Verfahren und Vorrichtung zur Durchführung von Konferenzen
Procédé et appareil de conférence

(30) Priority: 24.04.2007 US 739255
(43) Date of publication of application: 29.10.2008
(73) Proprietor: Aspect Software Inc., Chelmsford, MA 01824 (US)
(72) Inventor: Prabhuram, Mohan, San Jose, CA 95131 (US)
(74) Representative: Wablat, Wolfgang

(56) References cited:
- EP-A- 1 276 284
- WO-A-2005/062912
- CA-A1- 2 522 881

## Description

### Field of the Invention

The field of the invention relates to electronic messaging and more particularly to Internet messaging.

### Prior Art

WO 2005/062912 A2 discloses a system and method for initiating conference calls via an instant messaging (IM) system. The system uses an IM connection between a requesting party and a conference call server. The conference call server may initiate the conference call by having involved parties called by a conference bridge. However, the IM request to be sent to the conference call server has to be created manually by a conference call requester.

### Background of the Invention

The availability of the Internet has revolutionalized business. In the past, memos and letters could often take days to prepare and distribute, especially where the business operated from different locations.

Rather than rely upon the distribution of paper memos, many businesses now rely upon e-mails as a more efficient way of distributing information. Rather than days, e-mails can now be sent and delivered almost instantaneously.

While e-mails are much quicker, they also tend to be a distraction. Moreover, the ease with which e-mails may be sent often encourages the exchange of messages with little or no content. In addition, rather than distributing messages to one or two persons, it has now become convenient to distribute messages to defined groups.

As messages arrive, some recipients may choose to respond or ask questions. Responses are often distributed to the original group of recipients. As each new question or response arrives, it becomes another message that must be reviewed.

Moreover, if one person initiates a first message, and two people respond and two more people respond to each of the responses, then the number of e-mails may grow exponentially. At least some of the responses may be duplicates that add to the volume of messages to be reviewed.

While the use of e-mails has become an important means of communicating in many business contexts, the convenience of e-mail becomes a detriment in some situations. Accordingly, a need exists for a mechanism for reducing the proliferation of messages.

### Summary

A method and apparatus is provided for conferencing a plurality of users of a communication system. The method includes the steps of detecting a plurality of electronic messages directed to a common subject matter among the plurality of users, comparing a frequency of the detected messages among the plurality of users during a time period with a threshold value and setting up an electronic conference among the plurality of users when the frequency of messages exceeds the threshold value.

### Brief Description of the Drawings

FIG. 1 depicts a stand-alone system for conferencing users of a communication system generally in accordance with an illustrated embodiment of the invention; and
FIG. 2 depicts the conferencing system of FIG. 1 in the context of an organization.

### Detailed Description of an Illustrated Embodiment

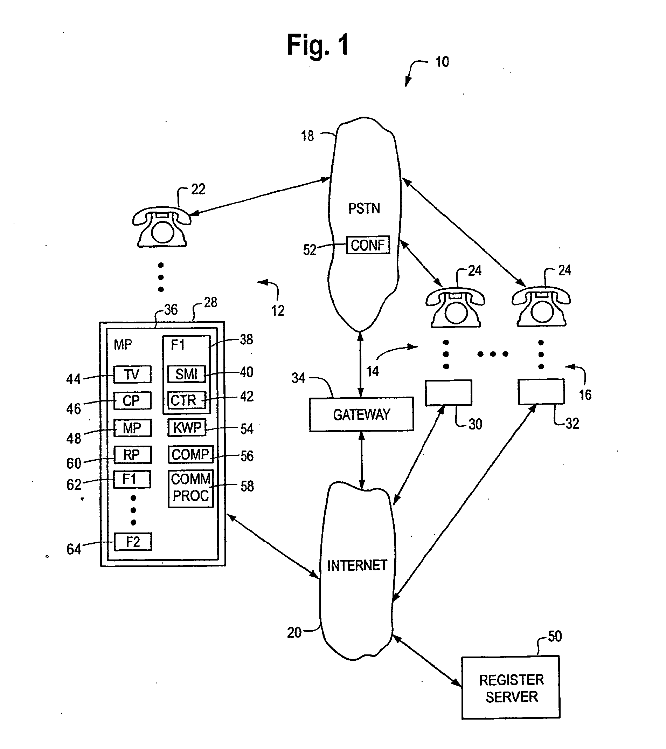

FIG. 1. is a block diagram of an automatic conferencing system 10 shown generally in accordance with an illustrated embodiment of the invention. The conferencing system 10 functions by monitoring messages among users of the system 10. If the number of messages among any subgroup of users within the system 10 exceeds a threshold level of number of messages per time period, the system sets up an electronic conference among the subgroup of users. As used herein, an electronic conference occurs through an electronic communication system (e.g., PSTN, Internet, LAN, WAN, etc.)

The system 10 includes two or more workstation 12, 14, 16 through which the users communicate through the public switch telephone network (PSTN) 18 or Internet 20. Each workstation 12, 14, 16, in turn, may include a telephone 22, 24, 26 and a terminal 28, 30, 32.

Under a first embodiment, the system 10 may include a message monitoring processor 36 within at least one of the user terminals 28, 30, 32. The monitoring processor 36 operates to detect the exchange of electronic messages between that user and other users.

For example, the monitoring processor 36 may monitor a Microsoft OUTLOOK application for received and sent e-mails. As each e-mail is sent and received, the monitoring processor 36 may retrieve a copy of the e-mail.

As each e-mail is retrieved, the monitoring processor 36 may attempt to determine whether the e-mail is directed to some common subject matter. The monitoring processor 36 may accomplish this objective using any of a number of different methods. Under a first method, the monitoring processor 36 may recover and compare any text present within a "Subject" field of the e-mail.

Alternatively, the monitoring processor 36 may compare the addressees of e-mails. In this case, if a number of e-mails are exchanged between the same group of people, then it may be assumed that the exchanges are related to the same subject matter.

In either case, the monitoring processor 36 may open a new file 38 each time an e-mail directed to a new subject is detected and save each e-mail directed to that subject matter in the file 38 along with a subject matter indicator 40 and an e-mail address of each user (i.e., the sender and all recipients). The subject matter indicator 40 may be text from the "Subject" line of the e-mail. As each new e-mail is received, the monitoring processor 36 may compare the subject matter indicator 40 of each new e-mail with the subject matter indicators 40 of previously opened files 38. If a match is found, then the monitoring processor 36 may add the new e-mail to the file 38 and increment a message counter 42 associated with the file 38.

As an alternative or adjunct to using the "Subject" line of e-mails, the monitoring processor 36 may also use a key word processor 54 to determine a subject matter of the content each e-mail. The key word processor 54 may process a word content of a body of the e-mail to identify a set of key words that may, in turn, be used to define another type of subject matter indicator 40. As each e-mail is received, the key word content is compared with the subject matter indicator 40 of existing files 38. Where a match is found, the new e-mail may be added to one or more existing files 38. If a match is not identified, then a new file 38 may be opened. As above, as each new e-mail is added to the file 38, the counter is incremented.

Included within the monitoring processor 36 may be a comparator processor 56 that compares the value contained within each counter 42 with a threshold value 44. The threshold value 44 may be adjustable and may be set to any appropriate value (e.g., four, five, etc.) electronic messages per time period (e.g., one minute, 30 minutes, etc.). If the value within the counter 42 exceeds the threshold value, then the comparator 56 may send a notification to a communication processor 58 including an identifier of the file 38 so that the communication processor 58 can set up a conference among the parties.

As a first step, the communication processor 58 may retrieve the e-mail addresses of each user from the file 38 and send a conference invitation e-mail asking if the user wishes to participate in a conference. If the monitoring processor 36 uses the "Subject" line as the subject matter indicator 40, then the e-mail may be in the form "Would you like to participate in a conference on ______", where the blank is filled in with the text from the "Subject" line of the previous e-mails. If the monitoring processor 36 uses key words as the subject matter indicator 40, then the e-mail may be in the form "Would you like to participate in a conference on subject matter identified by key words ______", where the blank is filled in with key words from previous e-mails and/or Ims.

The invitation e-mail may include a YES softkey and a NO softkey. In either case, activation of the YES softkey or NO softkey causes the user's terminal 28, 30, 32 to send a response back to the monitoring processor 36.

The communication processor 58 may monitor for responses. If at least two users provide an affirmative response by activating the YES softkey, then the communication processor 58 may set up a conference among the users providing the affirmative response (the participants).

The conferencing system 10 may form a conference connection under any real time format (e.g., Voice over Internet Protocol (VoIP), switched circuit connections through the PSTN, instant messaging (IM), etc.). If the format is VolP, then the communication processor 58 may assign a connection processor 46 to each participant and a mixing processor 48 to mix voice information from the participants. Each connection processor 46 functions as a portal with a respective participant 12, 14, 16. An incoming portion of the connection processor 46 receives voice information from the participant and routes the received voice information to the mixing processor 48. An outgoing portion of the connection processor 46 receives mixed voice information from the mixing processor 48 and routes the mixed voice information to the respective participant 12, 14, 16.

To set up the conference, the communication processor 58 may use an appropriate messaging scheme (e.g., Session Initiation Protocol (SIP)). In this case, the communication processor 58 may send a SIP INVITE addressed to the URL of each participant. The SIP INVITE may indicate to the participant 12, 14, 16 that the call is a VoIP conference call. The SIP INVITE may also provide a return pathway between a VoIP application in the participant's terminal 28, 30, 32 and the respective connection processor 46 assigned to the participant. The participant may simply activate a call accept softkey on his/her screen and be connected into the conference.

Upon occasion, at least some or all of the participants 12, 14, 16 may not have the appropriate VoIP software utilities to engage in a VoIP conference. In this case, the communication processor 58, may access a SIP REGISTER server 50 to retrieve a voice port identifier (e.g., a telephone number) of a participant 12, 14, 16. In this case, the communication processor 58 may set up at least a portion (or all) of the conference connection through the PSTN 18.

For example, if participant 14 did not have a VoIP utility on his/her terminal 30, then participant 14 could still be added to the conference through the gateway 34. In this case, the communication processor 58 may send a SIP INVITE message to the gateway 34. The destination address of the SIP INVITE would be the telephone number of the participant's telephone 24. The gateway 34 receives the request and sends a call request to the PSTN 18 for a switched circuit connection between the gateway 34 and the telephone 24 of the user. As above, the communication processor 58 allocates a connection processor 46 for receiving voice information from the telephone 24 through the gateway 34 on an inbound path to the mixer 48 and for transferring outbound voice information from the mixer 48 to the telephone 24 through the gateway 34.

Alternatively, the conference may also be set up entirely within the PSTN 18. In this case, the communication processor 58 may first reserve a conferencing utility 52 within the PSTN 18. The communication processor 58 may then sequentially place calls to the telephones 22, 24, 26 and transfer the calls to the conferencing utility 52.

In addition to setting up the conference, the communication processor 58 may also send an instruction to a recording processor 60 that functions to record the conference. The recording processor 60 receives mixed audio from the mixing processor 48 and saves the mixed audio in a file 62, 64 reserved for that purpose.

In addition to recording the conference, the recording processor 60 may also publish a hyperlink to the file 62, 64, so that any user 12, 14, 16 who was not a participant can later listen to the recording of the conference. Publication of the link may be accomplished in the form of an e-mail or IM to each user that references the subject matter of the recording.

In another embodiment, the conference may be set up under an IM format. In this case, the monitoring processor 36 functions as an IM server that receives messages from each of the terminals 28, 30, 32 of the participants and forwards each received message to each of the other participants.

As an alternative (or in addition to monitoring e-mails), the monitoring processor 36 may monitor instant messages (IMs) for common subject matter. In this case, the key word processor 54 may search a text content of each IM for key words. As above, the key words may be used to define a subject matter indicator 40. As each IM is received, a new file 38 may be opened or the IM may be added to one or more existing files. Each time that the IM is added to a file 38, the respective counter 42 may be incremented.

In this example, a file 38 may contain a combination of e-mails and/or IMs. When the counter 42 exceeds the threshold 44, the monitoring processor 36 takes steps to set up a conference among the participants as described above.

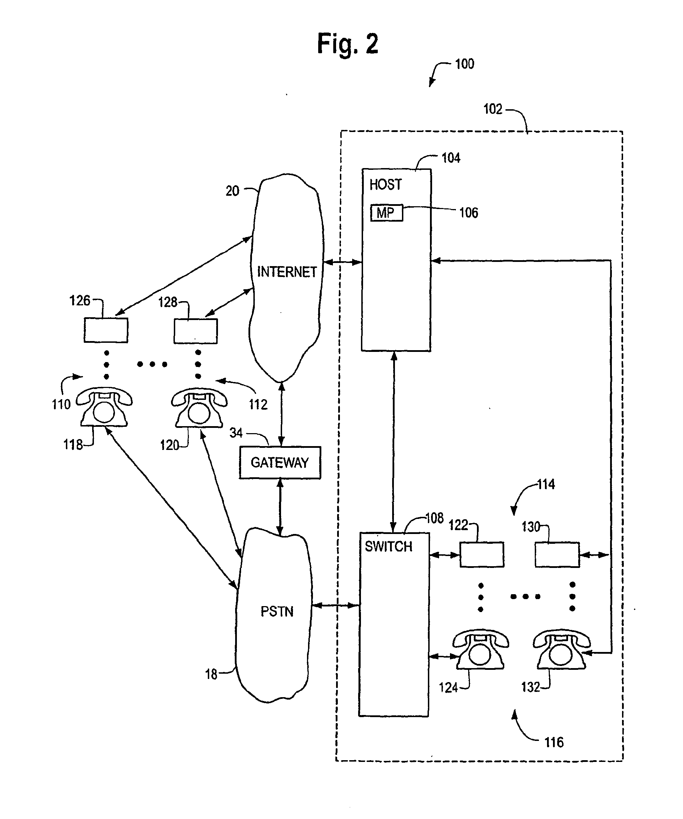

In another embodiment, the system 10 (now labeled 100 in FIG. 2) may be used by an organization 102 in the context of a local area network (LAN) or wide area network (WAN) 102. In this case, the organization 102 may include a host 104 and a telephone switch (e.g., a PBX, ACD, etc.) 108.

The monitoring processor 36 (now labeled 106 in FIG. 2) is located within a host 104 of the LAN or WAN and may be operatively coupled to an e-mail or IM server. The monitoring processor 106 may monitor electronic messages among work stations 110, 112, 114, 116. As above, each workstation may include a telephone 118, 120, 122, 124 and a computer terminal 126, 128, 130, 132.

The monitoring processor 106 has additional advantages over the previous monitoring processor 36 because the monitoring processor 106 is not associated with any particular work station 110, 112, 114, 116. Since the monitoring processor 106 is within the host 104 and is operatively coupled with the e-mail server and IM servers, the monitoring processor 106 can more effectively monitor a broader range of electronic messages among a more diverse group of persons.

The systems 100 may also have a threshold maximum value on the number of participants that may participate in a conference. In this case, the participant threshold operates to prevent the situation where the number of participants makes a conference impractical because the total number of participants is too large to allow any one participant to adequately express his/her opinion.

In the case where the number of users in a file 38 is too large, then the system 100 may pare the list of users from the file 38 based upon some criteria. Where the system 100 is used within an organization, the pared list may be limited to supervisors. This may be accomplished by a master list where the supervisors are identified based upon the identifiers of the users within the file. Alternatively, supervisors may be identified by the subject matter indicator 40 and an a priori knowledge of the expertise of each supervisor.

In general, the system 10, 100 functions to recognize the need to consolidate ideas and clarify instructions and information exchanged via electronic messages. The system 10, 100 significantly reduces the volume of electronic messages because it breaks the cycle of time-shifted question and answer. In this case, the time shift occurs because of the delay in preparing and reading electronic messages, either because some people only review their electronic messages infrequently or because some people will completely focus on preparing a question during some time period during which some other user may have already prepared and others answered the same question.

A specific embodiment of method and apparatus for conferencing has been described for the purpose of illustrating the manner in which the invention is made and used. It should be understood that the implementation of other variations and modifications of the invention and its various aspects will be apparent to one skilled in the art, and that the invention is not limited by the specific embodiments described.

### Reference List

- 10: Automatic conferencing system
- 12: Workstation/Participant
- 14: Workstation/Participant
- 16: Workstation/Participant
- 18: Public switch telephone network (PSTN)
- 20: Internet
- 22: Telephone
- 24: Telephone
- 26: Telephone
- 28: Terminal
- 30: Terminal
- 32: Terminal
- 34: Gateway
- 36: Message monitoring processor
- 38: File
- 40: Subject matter indicator
- 42: Message counter
- 44: Threshold value
- 46: Connection processor
- 48: Mixing processor
- 50: SIP REGISTER server
- 52: Conferencing utility
- 54: Key word processor
- 56: Comparator processor
- 58: Communication processor
- 60: Recording processor
- 62: File
- 64: File
- 100: System
- 102: LAN or WAN Organization
- 104: Host
- 106: Monitoring processor
- 108: Telephone switch
- 110: Work station
- 112: Work station
- 114: Work station
- 116: Work station
- 118: Telephone
- 120: Telephone
- 122: Telephone
- 124: Telephone
- 126: Computer terminal
- 128: Computer terminal
- 130: Computer terminal
- 132: Computer terminal

## Claims

1. A method of conferencing a plurality of users of a communication system (10, 100), **characterized by**
detecting a plurality of electronic messages directed to a common subject matter among the plurality of users;
comparing a frequency of the detected messages among the plurality of users during a time period with a threshold value (44); and
setting up an electronic conference among the plurality of userswhen the frequency of messages exceeds the threshold value (44).

2. The method of conferencing as in claim 1 further comprising sending a message to each of the plurality of users inquiring whether the conference should be set up.

3. The method of conferencing as in claim 1 wherein the detected messages further comprise e-mail messages or instant messages.

4. The method of conferencing as in claim 1 wherein the conference further comprises a voice connection or a VoIP connection.

5. The method of conferencing as in claim 4 wherein the voice connection further comprises a switched circuit connection.

6. The method of conferencing as in claim 1 further comprising recording the conference.

7. The method of conferencing as in claim 6 further comprising publishing a link to the recorded conference to the plurality of users.

8. The method of conferencing as in claim 6 wherein the step of publishing the link further comprises sending the link to the plurality of users within an e-mail.

9. The method of conferencing as in claim 1 wherein the step of detecting the plurality of messages further comprises matching a subject matter field among the messages.

10. The method of conferencing as in claim 1 wherein the step of detecting the plurality of messages further comprises matching identifiers of the plurality of participants among a plurality of messages.

11. An apparatus (10, 100) for conferencing a plurality of users of a communication system , **characterized by**
means (36) for detecting a plurality of electronic messages directed to a common subject matter among the plurality of users;
means (56) for comparing a frequency of the detected messages among the plurality of users during a time period with a threshold value (44); and
means (58) for setting up an electronic conference among the plurality of users when the frequency of messages exceeds the threshold value (44).

12. An apparatus (10, 100) for conferencing as in claim 11, **characterized in that**
the means (36) for detecting a plurality of electronic messages directed to a common subject matter among the plurality of users is a monitoring processor (36, 106),
the means (56) for comparing a frequency of the detected messages among the plurality of users during a time period with a threshold value (44) is a comparator (56) and
the means (58) for setting up an electronic conference among the plurality of users when the frequency of messages exceeds the threshold value (44) is a communication processor (58).

13. The apparatus (10, 100) for conferencing as in claim 11 or 12 further comprising means (58) for sending a message to each of the plurality of users inquiring whether the conference should be set up.

14. The apparatus (10, 100) for conferencing as in claim 11 or 12 wherein the detected messages further comprise e-mail messages or instant messages.

15. The apparatus (10, 100) for conferencing as in claim 11 or 12 wherein the conference further comprises a voice connection or a VoIP connection.

16. The apparatus (10, 100) for conferencing as in claim 15 wherein the voice connection further comprises a switched circuit connection.

17. The apparatus (10, 100) for conferencing as in claim 11 or 12 further comprising means (60) for recording the conference.

18. The apparatus (10, 100) for conferencing as in claim 17 further comprising means for publishing a link to the recorded conference to the plurality of users.

19. The apparatus (10, 100) for conferencing as in claim 17 wherein the means for publishing the link further comprises means for sending the link to the plurality of users within an e-mail.

20. The apparatus (10, 100) for conferencing as in claim 11 or 12 wherein the means for detecting the plurality of messages further comprises means (54) for matching a subject matter field among the messages.

21. The apparatus (10, 100) for conferencing as in claim 11 or 12 wherein the means for detecting the plurality of messages further comprises means for matching identifiers of the plurality of participants among a plurality of messages.

## Patentansprüche

1. Verfahren zur Konferenzschaltung einer Vielzahl von Nutzern eines Kommunikationssystems (10, 100), **gekennzeichnet durch**
Erfassen einer Vielzahl von elektronischen Nachrichten, die unter einer Vielzahl von Nutzern auf einen gemeinsamen Gegenstand gerichtet sind;
Vergleichen einer Häufigkeit der erfassten Nachrichten unter der Vielzahl von Nutzern während eines Zeitraums mit einem Grenzwert (44); und
Aufbauen einer elektronischen Konferenz unter der Vielzahl von Nutzern, wenn die Häufigkeit der Nachrichten den Grenzwert (44) überschreitet.

2. Verfahren zur Konferenzschaltung nach Anspruch 1, das weiterhin ein Senden einer Nachricht an jeden aus der Vielzahl der Nutzer umfasst, die anfragt, ob die Konferenz aufgebaut werden soll.

3. Verfahren zur Konferenzschaltung nach Anspruch 1, in dem die erfassten Nachrichten weiterhin E-mail-Nachrichten oder Instant Messages umfassen.

4. Verfahren zur Konferenzschaltung nach Anspruch 1, in dem die Konferenz weiterhin eine Sprachverbindung oder eine VoIP-Verbindung umfasst.

5. Verfahren zur Konferenzschaltung nach Anspruch 4, in dem die Sprachverbindung weiterhin eine Wähl-Schalt-Verbindung umfasst.

6. Verfahren zur Konferenzschaltung nach Anspruch 1, das weiterhin ein Aufzeichnen der Konferenz umfasst.

7. Verfahren zur Konferenzschaltung nach Anspruch 6, das weiterhin ein Veröffentlichens eines Links zu der Aufgezeichneten Konferenz für die Vielzahl von Nutzern umfasst.

8. Verfahren zur Konferenzschaltung nach Anspruch 6, in dem der Schritt des Veröffentlichen des Links weiterhin ein Senden des Links zu der Vielzahl von Nutzern in einer E-mail umfasst.

9. Verfahren zur Konferenzschaltung nach Anspruch 1, in dem der Schritt des Erfassens der Vielzahl von Nachrichten weiterhin ein Abgleichen eines Betreff-Feldes unter der Vielzahl von Nachrichten umfasst.

10. Verfahren zur Konferenzschaltung nach Anspruch 1, in dem der Schritt des Erfassens der Vielzahl von Nachrichten weiterhin unter der Vielzahl von Nachrichten ein Abgleichen von Kennungen der Vielzahl von Nutzern umfasst.

11. Vorrichtung (10, 100) zur Konferenzschaltung einer Vielzahl von Nutzern eines Kommunikationssystems, **gekennzeichnet durch**
ein Mittel (36) zum Erfassen einer Vielzahl von elektronischen Nachrichten unter der Vielzahl von Nutzern, die auf einen gemeinsamen Gegenstand gerichtet sind;
ein Mittel (56) zum Vergleichen einer Häufigkeit der erfassten Nachrichten unter der Vielzahl von Nutzern während eines Zeitraums mit einem Grenzwert (44); und
ein Mittel (58) zum Aufbauen einer elektronischen Konferenz unter der Vielzahl von Nutzern, wenn die Häufigkeit der Nachrichten den Grenzwert überschreitet (44).

12. Vorrichtung (10, 100) zur Konferenzschaltung nach Anspruch 11, **dadurch gekennzeichnet, dass** das Mittel (36) zum Erfassen einer Vielzahl von elektronischen Nachrichten unter einer Vielzahl von Nutzern, die auf einen gemeinsamen Gegenstand gerichtet sind, ein Überwachungsprozessor (36, 106) ist,
das Mittel (56) zum Vergleichen der Häufigkeit der unter einer Vielzahl von Nutzern erfassten Nachrichten während eines Zeitraums mit einem Grenzwert (44) ein Komparator (56) ist und
das Mittel (58) zum Aufbauen einer elektronischen Konferenz unter der Vielzahl von Nutzern, wenn die Häufigkeit der Nachrichten den Grenzwert (44) überschreitet, ein Kommunikationsprozessor (58) ist.

13. Vorrichtung (10, 100) zur Konferenzschaltung nach Anspruch 11 oder 12, die weiterhin ein Mittel (58) zum Senden einer Nachricht an jeden aus der Vielzahl von Nutzern umfasst, die anfragt, ob die Konferenz aufgebaut werden soll.

14. Vorrichtung (10, 100) zur Konferenzschaltung nach Anspruch 11 oder 12, in der die erfassten Nachrichten weiterhin E-mail-Nachrichten oder Instant Messages umfassen.

15. Vorrichtung (10, 100) zur Konferenzschaltung nach Anspruch 11 oder 12, in der die Konferenz weiterhin eine Sprachverbindung oder eine VoIP-Verbindung umfasst.

16. Vorrichtung (10, 100) zur Konferenzschaltung nach Anspruch 15, in der die Sprachverbindung weiterhin eine Wähl-Schalt-Verbindung umfasst.

17. Vorrichtung (10, 100) zur Konferenzschaltung nach Anspruch 11 oder 12, die weiterhin ein Mittel (60) zum Aufzeichnen der Konferenz umfasst.

18. Vorrichtung (10, 100) zur Konferenzschaltung nach Anspruch 17, die weiterhin ein Mittel zum Veröffentlichen eines Links zu der aufgezeichneten Konferenz unter der Vielzahl von Nutzern umfasst.

19. Vorrichtung (10, 100) zur Konferenzschaltung nach Anspruch 17, in der das Mittel zum Veröffentlichen des Links weiterhin ein Mittel zum Senden des Links an die Vielzahl von Nutzern in einer E-mail umfasst.

20. Vorrichtung (10, 100) zur Konferenzschaltung nach Anspruch 11 oder 12, in der das Mittel zum Erfassen der Vielzahl von Nachrichten weiterhin ein Mittel (54) zum Abgleichen eines Betreff-Feldes unter den Nachrichten umfasst.

21. Vorrichtung (10, 100) zur Konferenzschaltung nach Anspruch 11 oder 12, in dem das Mittel zum Erfassen der Vielzahl von Nachrichten weiterhin ein Mittel zum Abgleichen der Kennungen der Vielzahl von Teilnehmern unter einer Vielzahl von Nachrichten umfasst.

## Revendications

1. Procédé de communication en conférence d'une pluralité d'utilisateurs d'un système de communication (10,100), **caractérisé par** les étapes consistant à
détecter une pluralité de messages électroniques se rapportant à un thème commun parmi la pluralité d'utilisateurs ;
comparer une fréquence des messages détectés parmi la pluralité d'utilisateurs pendant une période de temps avec une valeur seuil (44) ; et
établir une conférence électronique parmi la pluralité d'utilisateurs quand la fréquence des messages excède la valeur seuil (44).

2. Procédé de communication en conférence selon la revendication 1 comprenant en outre l'envoi d'un message à chacun de la pluralité des utilisateurs demandant si la conférence doit être établie.

3. Procédé de communication en conférence selon la revendication 1, dans lequel les messages détectés comprennent en outre des messages e-mail ou des messages instantanés.

4. Procédé de communication en conférence selon la revendication 1, dans lequel la conférence comprend en outre une connexion vocale ou une connexion VoIP.

5. Procédé de communication en conférence selon la revendication 4, dans lequel la connexion vocale comprend en outre une connexion à commutation de circuits.

6. Procédé de communication en conférence selon la revendication 1 comprenant en outre l'enregistrement de la conférence.

7. Procédé de communication en conférence selon la revendication 6 comprenant en outre la publication d'un lien vers la conférence enregistrée à la pluralité d'utilisateurs.

8. Procédé de communication en conférence selon la revendication 6, dans lequel l'étape de publication du lien comprend en outre l'envoi du lien à la pluralité d'utilisateurs à l'intérieur d'un e-mail.

9. Procédé de communication en conférence selon la revendication 1, dans lequel l'étape de détection de la pluralité de messages comprend en outre de faire concorder un champ de thème parmi les messages.

10. Procédé de communication en conférence selon la revendication 1, dans lequel l'étape de détection de la pluralité de messages comprend en outre de faire concorder des identifiants de la pluralité de participants parmi une pluralité de messages.

11. Appareil (10,100) pour la communication en conférence d'une pluralité d'utilisateurs d'un système de communication, **caractérisé par**
des moyens (36) pour détecter une pluralité de messages électroniques se rapportant à un thème commun parmi la pluralité d'utilisateurs ;
des moyens (56) pour comparer une fréquence des messages détectés parmi la pluralité d'utilisateurs pendant une période de temps avec une valeur seuil (44) ; et
des moyens (58) pour établir une conférence électronique parmi la pluralité d'utilisateurs quand la fréquence des messages excède la valeur seuil (44).

12. Appareil (10,100) pour la communication en conférence selon la revendication 11, **caractérisé en ce que**
les moyens (36) pour détecter une pluralité de messages électroniques se rapportant à un thème commun parmi la pluralité d'utilisateurs sont un processeur de surveillance (36,106),
les moyens (56) pour comparer une fréquence des messages détectés parmi la pluralité d'utilisateurs pendant une période de temps avec une valeur seuil (44) sont un comparateur (56), et
les moyens (58) pour établir une conférence électronique parmi la pluralité d'utilisateurs quand la fréquence des messages excède la valeur seuil (44) sont un processeur de communication (58).

13. Appareil (10,100) pour la communication en conférence selon la revendication 11 ou 12 comprenant en outre des moyens (58) pour envoyer un message à chacun de la pluralité d'utilisateurs demandant si la conférence doit être établie.

14. Appareil (10,100) pour la communication en conférence selon la revendication 11 ou 12 dans lequel les messages détectés comprennent en outre des messages e-mail ou des messages instantanés.

15. Appareil (10,100) pour la communication en conférence selon la revendication 11 ou 12, dans lequel la conférence comprend en outre une connexion vocale ou une connexion VoIP.

16. Appareil (10,100) pour la communication en conférence selon la revendication 15, dans lequel la connexion vocale inclut en outre une connexion à commutation de circuits.

17. Appareil (10,100) pour la communication en conférence selon la revendication 11 ou 12, comprenant en outre des moyens (60) pour enregistrer la conférence.

18. Appareil (10,100) pour la communication en conférence selon la revendication 17, comprenant en outre des moyens pour publier un lien vers la conférence enregistrée à la pluralité d'utilisateurs.

19. Appareil (10,100) pour la communication en conférence selon la revendication 17, dans lequel les moyens pour publier le lien incluent en outre des moyens pour envoyer le lien à la pluralité d'utilisateurs à l'intérieur d'un e-mail.

20. Appareil (10,100) pour la communication en conférence selon la revendication 11 ou 12, dans lequel les moyens pour détecter la pluralité de messages comprennent en outre des moyens (54) pour faire concorder un champ de thème parmi les messages.

21. Appareil (10,100) pour la communication en conférence selon la revendication 11 ou 12, dans lequel les moyens pour détecter la pluralité de messages comprennent en outre des moyens pour faire concorder les identifiants de la pluralité de participants parmi une pluralité de messages.
